Europäisches Patentamt

European Patent Office

Office européen des brevets

(11) Publication number: **0 396 452**
**A2**

## EUROPEAN PATENT APPLICATION

(21) Application number: **90401121.0**

(22) Date of filing: **25.04.90**

(51) Int. Cl.5: **G01B 7/06**

(30) Priority: **01.05.89 US 345248**

(43) Date of publication of application:
**07.11.90 Bulletin 90/45**

(84) Designated Contracting States:
**DE FR GB IT SE**

(71) Applicant: **MEASUREX CORPORATION**
**One Results Way**
**Cupertino, California 95014(US)**

(72) Inventor: **Norton, Michael Kent**
**18700 Blythswood Drive**
**Los Gatos, California 95030(US)**

(74) Representative: **Mongrédien, André et al**
**c/o SOCIETE DE PROTECTION DES**
**INVENTIONS 25, rue de Ponthieu**
**F-75008 Paris(FR)**

(54) Caliper sensor of the contacting type.

(57) A caliper sensor of the contacting-type for measuring the thickness of travelling sheets (12) of thin materials having coated surfaces. The caliper sensor has first and second skid members (26, 38) that ride on opposite surfaces of a travelling sheet (12). The riding surface of each skid member includes a planar circular section for parallel contact with the sheet and a tapered section which peripherally surrounds the circular section and which tapers away from the plane of the sheet at an angle ranging from about $1°$ to about $5°$.

EP 0 396 452 A2

# CALIPER SENSOR OF THE CONTACTING TYPE

## BACKGROUND OF THE INVENTION

### Field of the Invention:

The present invention generally relates to caliper sensors and, more particularly, to caliper sensors of the contacting type for measuring the thickness of thin sheet materials.

### State of the Art:

In the sheetmaking art, it is well known to employ caliper sensors for measuring the thickness of sheet materials during production. Generally speaking, such on-line caliper sensors can be characterized as being either of the contacting or non-contacting type. An example of a caliper sensor of the non-contacting type is shown in U.S. Patent No. 3,528,002.

Generally, caliper sensors of the contacting type can be advantageously used where sheets are compressible and, therefore, where measurements made by caliper sensors of the contacting type could be different than measurements by sensors of the non-contacting type. For example, in the papermaking art, industry standards require paper thickness to be measured by caliper sensors of the contacting type. Caliper sensors of the contacting type are disclosed in U.S. Patent Nos. 3,828,248 and 4,134,211.

The caliper sensors described in U.S. Patent No. 4,134,211 were designed for on-line detection of the caliper of thin sheets, such as tissue, without tearing the sheets. Although those caliper sensors function satisfactorily with thin uncoated papers, experience has shown that coated papers can cause malfunctions. The problems in measuring caliper of coated sheets appear to be caused by particles which are occasionally embedded in the coatings. Typically, the embedded particles are minute, ranging in diameter from about ten to twenty microns. During sheetmaking, the velocity of such particles can reach about thirty miles per hour and, sometimes, nearly sixty miles per hour. When embedded particles, at such velocities, strike a caliper sensor of the contacting type, the impact force can cause tears or perforations in the sheet material carrying the particles. Although one approach to reducing tears and perforations during caliper measurements of thin coated sheets is to reduce the mass of the sheet contacting elements of a caliper gauge, there are practical drawbacks to such an approach.

## SUMMARY OF THE INVENTION

Generally speaking, the present invention provides a caliper sensor of the contacting-type that is especially adapted for measuring the thickness of travelling sheets which are thin and have coated surfaces. For example, the caliper sensor of the present invention is particularly well adapted for measuring sheets having a thickness ranging from about twenty-five to about one hundred microns. The caliper sensor includes first and second skid members which are mounted to extensible means and biased to ride on opposite surfaces of a travelling sheet. The riding surface of each of the skid members has a planar circular section for parallel contact with the sheet and a beveled section which peripherally surrounds the circular section and which tapers therefrom at an angle ranging from about $1°$ to about $5°$.

## BRIEF DESCRIPTION OF THE DRAWINGS

The present invention can be further understood by reference to the following description and attached drawings which illustrate the preferred embodiment. In the drawings:

FIGURE 1 is a side view of a caliper sensor according to the present invention;

FIGURE 2 is an enlarged view of one component of the caliper sensor taken along the plane of the line 2-2 in FIGURE 1 for viewing in the direction of the arrows; and

FIGURE 3 is a side view of the component of the caliper sensor shown in FIGURE 2.

## DETAILED DESCRIPTION OF THE PREFERRED EMBODIMENT

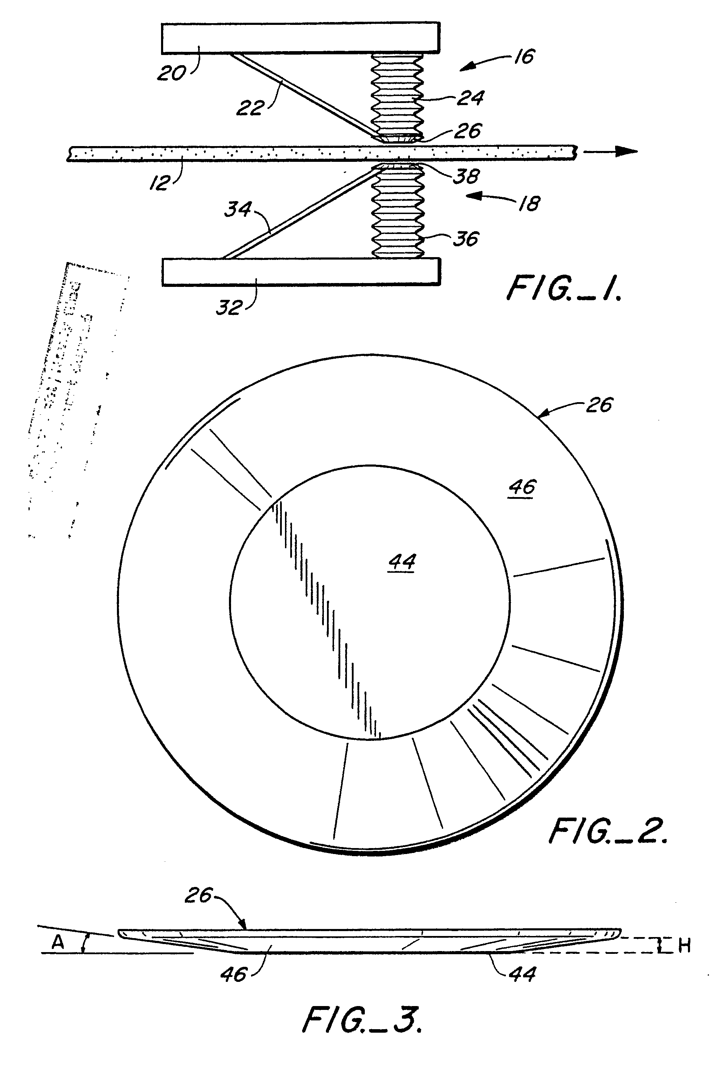

In FIGURE 1, a caliper sensor of the contacting type includes upper and lower heads 16 and 18 which are arranged adjacent the opposite faces of a travelling sheet 12. It should be understood that sheet 12 moves horizontally between the heads in the direction indicated by the arrow. Relative to the direction of sheet travel, the caliper sensor can be said to have forward and rearward ends.

As further shown in FIGURE 1, upper head 16 includes an upper base member 20 and an arm 22. The arm 22 is hinged to base member 20 near its forward end. An extensible bellow-like member 24 is connected between base member 20 and the depending end of strut member 22. It should be understoood that bellow-like member 24 is generally cylindrical in cross section and that, in the assembly, the axial centerline of the bellow-like member is substantially perpendicular to the surface of sheet 12. A first skid member 26 is attached to the lower end of bellow-like member 24 to provide a surface for riding on sheet 12.

In structural terms, lower head 18 is substantially identical to upper head 16 and its components are connected in a manner similar to that described above. Thus, in the embodiment illustrated in FIGURE 1, lower head 18 includes a base member 32, an arm 34, and a bellow-like member 36. Also, lower head 18 includes a second skid member 38 which is attached to the upper end of bellow-like member 36 for riding on sheet 12. It should be noted that bellow-like members 24 and 36 are generally axially aligned and that skid members 26 and 38 are arranged to face one another in generally parallel relation while riding on opposite sides of sheet 12.

In the preferred embodiment, electronic components to detect the thickness of sheet 12 are housed in one of the bellow-like members 24 and 36. Preferably, the electronics comprise electro-magnetic sensors. Examples of suitable sensors of the electro-magnetic type are described in U.S. Patent No. 3,828,248.

FIGURES 2 and 3 show details of upper skid member 26. In the illustrated embodiment, the skid member generally is disc shaped and its bottom surface comprises a flat circular section 44 surrounded by an upwardly tapering, or beveled, concentric peripheral section 46. In the illustrated embodiment, peripheral section 46 can be described as being generally frusto-conical, since its sidewall is generally linear. In the preferred embodiment, peripheral section 46 tapers away from planar section 44 at an angle "A" ranging from about 1° to about 5°. In practice, the diameter of circular section 44 typically exceeds about 0.5 inches and, usually, is about 0.625 inches (i.e., 5/8 inch). The outer diameter of frusto-conical section 46 typically exceeds about one inch and, usually, is about 1 1/8 inches. Accordingly, the height "H" of peripheral section 46 usually ranges from about two to about four mils. It should be noted that height "H" is about twice the diameter of particles typically encountered on coated paper under normal operating conditions.

In an alternative embodiment, skid member 26 has generally the dimensions above, but peripheral section 46 is an arcuate surface having a radius of curvature exceeding about twenty inches and, usually, equal to about twenty-seven inches.

Skid members 26 and 38 are substantially identical in terms of their finish, shape and material of construction. Generally, the material should be hard, abrasion resistant, and capable of taking a highly polished surface. Preferably, the material is sapphire or ferrite.

Operation of the caliper sensor of FIGURES 1-3 will now be described. Initially, it should be understood that bellow-like members 24 and 36 are operably extended so that upper and lower skid members 26 and 38 ride directly on the opposite surfaces of travelling sheet 12 in parallel, generally concentric relation to one another. Ideally, the two skid members are pressed against sheet 12 with a force which is maintained constant. Under such circumstances, the distance separating upper skid member 26 from lower skid member 38 serves to measure the thickness of sheet 12 as it passes between the two skid members of the caliper sensor.

When the caliper sensor of FIGURE 1 is operated to detect the caliper of coated sheets, particles embedded in the sheet coatings will occasionally encounter one or the other of the skid members 26 or 38. Upon such an encounter, the embedded particle will first strike the tapered peripheral section of the skid member. Because the gap between sheet and the surface of the skid member gradually decreases due to the gradual slope of the tapered peripheral section, the force of the embedded particle against the skid member will increase relatively gradually. In turn, the gradual increase in force reduces the acceleration rate required for the skid member to move away from the sheet so that the embedded particle can pass through the caliper sensor. The net result is to reduce the likelihood that an embedded particle will tear or perforate a sheet when passign through the caliper sensor.

At this juncture, it can be understood that the caliper sensor of FIGURE 1 can be stationarily mounted on a sheetmaking machine, or the caliper sensor can be mounted to a scanning device which carries it back and forth across a sheetmaking machine in the cross-direction. In typical practice, one or more such caliper sensors are connected to a profile analyzer for providing signals indicative of the magnitude of the sheet thickness at selected cross-directional measurement points. In turn, the profile analyzer is connected for providing control signals to selected profile actuators.

The foregoing has described the principles, preferred embodiments and modes of operation of the present invention. However, the present invention should not be construed as being limited to the particular embodiments disclosed, and the embodiments described herein are to be regarded as illustrative rather than restrictive. Variations and changes may be made in the illustrated embodiments without departing from the spirit of the present invention as defined by the following claims.

**Claims**

1. A caliper sensor of the contacting-type for measuring the thickness of a travelling sheet, comprising:
a first base means mounted ajdacent one side of a moving sheet;
a first skid member connnected to the first base means to ride on one surface of a travelling sheet, the riding surface of the first skid member having a planar, generally circular section for parallel contact with the sheet, and a tapered section which peripherally surrounds the circular section and which tapers therefrom away from the plane of the sheet at an angle ranging from about 1° to about 5°;
a second base means mounted adjacent the other side of the sheet; and
a second skid member connected to the second base means to ride on the opposite surface of the moving sheet in parallel and aligned relation to the first skid member, the riding surface of the second skid member having a planar, generally circular section for parallel contact with the sheet, and a tapered section which peripherally surrounds the circular section and which tapers away from the plane of the sheet at an angle ranging from about 1° to about 5°.

2. A caliper sensor according to claim 1 wherein the tapered sections of the first and second skid members are frusto-conical.

3. A caliper sensor according to claim 1 wherein the tapered sections of the first and second skid members are arcuate.

4. A caliper sensor according to claim 1 wherein the tapered sections of the first and second skid members are arcuate with a radius of curvature exceeding about twenty inches.

5. A caliper sensor according to claim 1 wherein the first and second skid members are formed from a material which is hard, abrasion-resistant, and capable of providing a highly polished surface.

6. A caliper sensor according to claim 5 wherein the material is selected from the class comprising sapphire and ferrite.

7. A caliper sensor according to claim 1 wherein the planar circular sections of the first and second skid members each have a diameter exceeding about 0.5 inches.

8. A caliper sensor according to claim 7 wherein the outer diameters of the tapered sections of the first and second skid members each exceeds about one inch.

9. A caliper sensor according to claim 1 wherein the tapered section of the first skid member is arranged generally concentric with the planar circular section of the first skid member.

*FIG._I.*

*FIG._2.*

*FIG._3.*